# EUROPÄISCHE PATENTANMELDUNG

(11) **EP 1 858 301 A1**
(43) Veröffentlichungstag der Anmeldung: **21.11.2007**
(21) Anmeldenummer: 06010104.5
(22) Anmeldetag: 16.05.2006
(51) Int. Cl.: H05B 33/08, H05B 37/02

(54) **LED-Beleuchtungssystem und -verfahren zur Erzeugung einer vorgebbaren Farbsequenz**

(71) Anmelder: Patent-Treuhand-Gesellschaft für elektrische Glühlampen mbH, 81543 München (DE)
(72) Erfinder: Huber, Andreas, 82194 Gröbenzell (DE); Hying, Ralf, 81827 München (DE); Schallmoser, Oskar, 85521 Ottobrunn (DE)
(74) Vertreter: Raiser, Franz

(57) **Zusammenfassung**

Die Erfindung betriff ein Beleuchtungssystem mit einer ersten Lichtquelle (41, 51, 61), welche zur Erzeugung von Lichtsignalen einer ersten Farbe ausgebildet ist, und zumindest einer zweiten Lichtquelle (41, 51, 61), welche zur Erzeugung von Lichtsignalen einer zweiten Farbe ausgebildet ist, wobei die Lichtquellen (41, 51, 61) zur Erzeugung einer vorgebbaren Farbsequenz ansteuerbar sind, und wobei die Lichtquellen (41, 51, 61) durch eine gemeinsame Steuereinheit (7) betreibbar und durch diese in der für die Erzeugung vorgebbaren Farbsequenz erforderlichen Folge ansteuerbar sind. Die Erfindung betrifft auch ein Verfahren zum Betreiben eines Beleuchtungssystems.

## Beschreibung

### Technisches Gebiet

Die vorliegende Erfindung betrifft ein Beleuchtungssystem mit einer ersten Lichtquelle, welche zur Erzeugung von Lichtsignalen einer ersten Farbe ausgebildet ist, und zumindest einer zweiten Lichtquelle, welche zur Erzeugung von Lichtsignalen einer zweiten Farbe ausgebildet ist, wobei die Lichtquellen zur Erzeugung einer vorgebbaren Farbsequenz ansteuerbar sind. Die Erfin-, dung betrifft auch ein Verfahren zum Betreiben eines derartigen Beleuchtungssystems.

### Stand der Technik

Bei Beleuchtungssystemen wie Bildprojektionssystemen ist es bekannt, dass ein DLP (Digital Light Processing) -Chip zur Erzeugung von Bildfolgen eingesetzt wird. Dieser DLP-Chip kann jedoch nur Graustufenbilder erzeugen. Um eine farbige Darstellung erreichen zu können, ist es erforderlich, dass die eingesetzte Lichtquelle des Bildprojektionssystems verschiedenfarbiges Licht in schneller Abfolge erzeugt. Ist die Lichtquelle als HID (High Intensity Discharge) -Lampe ausgebildet und zur Erzeugung weißen Lichts vorgesehen, so ist es erforderlich, dass ein sogenanntes Farbrad zur Erzeugung des verschiedenenfarbigen Lichts eingesetzt wird. Dieses Farbrad besteht aus mehreren durchsichtigen Farbfiltern, die durch Rotation des Farbrades die gewünschte Farbsequenz erzeugen. Unter einer Farbsequenz wird dabei die zeitliche und/oder örtliche Änderung von einer auf einer Projektionsfläche dargestellten Farbwiedergabe oder Farbabfolge verstanden. Beispielsweise kann diese Farbsequenz bei einem Bildprojektionssystem auf einem Display, beispielsweise einem LCD (Liquid Crystal Display) -Display oder einer DLP-Anzeige erfolgen. Die Anzeige einer derartigen Farbsequenz kann jedoch auch auf einer anderen Projektionsfläche oder einer anderen Anzeige erfolgen.

Um eine derartige Farbsequenz auch mit Leuchtdioden zu erhalten, welche jeweils zur Erzeugung von Lichtsignalen einer individuellen Farbe ausgebildet sind, werden diese Leuchtdioden sequenziell ein- und ausgeschaltet. Dazu wird jede Leuchtdiode über eine eigene separate Steuereinheit betrieben. Die bekannten Vorgehensweisen und Ausgestaltungen sind relativ aufwändig konzipiert und können nicht in allen Fällen eine ausreichende Darstellung der gewünschten Farbsequenz ermöglichen.

### Darstellung der Erfindung

Der vorliegenden Erfindung liegt deshalb die Aufgabe zu Grunde, ein Beleuchtungssystem sowie ein Verfahren zum Betreiben des Beleuchtungssystems zu schaffen, mit welchem die Darstellung von Farbsequenzen verbessert werden kann.

Diese Aufgabe wird durch ein Beleuchtungssystem, welches die Merkmale nach Patentanspruch 1 aufweist, und ein Verfahren, welches die Merkmale nach Patentanspruch 15 aufweist, gelöst.

Ein erfindungsgemäßes Beleuchtungssystem umfasst eine erste Lichtquelle, welche zur Erzeugung von Lichtsignalen einer ersten Farbe ausgebildet ist und zumindest eine zweite Lichtquelle, welche zur Erzeugung von Lichtsignalen einer zweiten Farbe ausgebildet ist. Die Lichtquellen sind zur Erzeugung einer vorgebbaren Farbsequenz ansteuerbar. Ein wesentlicher Gedanke der Erfindung besteht darin, dass die Lichtquellen des Beleuchtungssystems, insbesondere alle Lichtquellen, durch eine gemeinsame einzige Steuereinheit betreibbar und durch diese eine Steuereinheit in der für die Erzeugung vorgebbaren Farbsequenz erforderlichen Art und Weise, insbesondere in der erforderlichen Reihenfolge, ansteuerbar sind. Dadurch kann ein Beleuchtungssystem geschaffen werden, welches mit vermindertem Aufwand eine optimale Ansteuerung von mehreren Lichtquellen im Hinblick auf die Erzeugung einer gewünschten Farbsequenz ermöglicht. Das Beleuchtungssystem kann dadurch kompakter und kostengünstiger realisiert werden. Indem alle Lichtquellen durch eine gemeinsame Steuereinheit individuell ansteuerbar sind, kann auch die Genauigkeit der erzeugten Lichtintensität in ihrem zeitlichen Verlauf und damit auch die Bildqualität verbessert werden und komplexe Farbsequenzen präzise erzeugt werden.

Vorzugsweise sind die Lichtquellen parallel geschaltet und über einen ersten Schaltungsknoten zur Energieversorgung mit einer Energieversorgungseinheit, insbesondere einer Stromquelle, elektrisch verbunden. Bevorzugt ist die Stromquelle zur Bereitstellung zumindest eines elektrischen Stroms mit dominantem Gleichanteil oder zur Bereitstellung eines Gleichstroms ausgebildet.

Bevorzugt umfasst das Beleuchtungssystem auch eine Reglereinheit zur Regelung der Energieversorgungseinheit, welche mit der Steuereinheit verbunden ist. Die Steuereinheit ist bevorzugt zur Vorgabe einer Soll-Energieabgabe der Energieversorgungseinheit, insbesondere der Stromquelle, sowie einer Schaltfrequenz zum Ein- und Ausschalten der Energieversorgungseinheit ausgebildet, wobei diese beiden Vorgabeparameter an die Reglereinheit übertragbar sind. Ist die Energieversorgungseinheit als Stromquelle ausgebildet, so ist diese bevorzugt als Tiefsetzsteller oder als Buck-Converter ohne Ausgangs-Filterkondensator konzipiert.

Die Lichtquellen des Beleuchtungssystems sind bevorzugt jeweils in parallel zueinander geschalteten Signalpfaden geschaltet, wobei zumindest eine Lichtquelle in dem entsprechenden Signalpfad in Reihe zu einem Schalter geschaltet ist, und die Schalter mittels der Steuereinheit zum Öffnen oder Schließen ansteuerbar sind. Es kann auch vorgesehen sein, dass bei einer Mehrzahl N an Lichtquellen des Beleuchtungssystems, eine Anzahl N-1 jeweils in Reihe zu einem zugeordneten Schalter in dem entsprechenden Signalpfad geschaltet sind. Lediglich eine der Lichtquellen weist keine Reihenschaltung zu einem Schalter auf. Bei einer derartigen Ausführung weist die Lichtquelle, welche nicht in Reihe zu einem Schalter geschaltet ist, die größte Flussspannung im Vergleich zu den weiteren Lichtquellen des Beleuchtungssystem auf. Bei einer Ausgestaltung, bei der lediglich eine Anzahl N-1 von Lichtquellen jeweils in Reihe zu einem Schalter geschaltet ist, ist somit bevorzugt die Lichtquelle, welche keine Reihenschaltung zu einem Schalter aufweist, diejenige mit der höchsten charakteristischen Arbeitsspannung. Durch eine derartige Ausgestaltung kann in bauteilarmer Weise ein sicheres Betreiben der Lichtquellen ermöglicht werden und es ist lediglich eine Steuereinheit und ein einfach konzipierte Schalter, insbesondere Halbleiterschalter, erforderlich, wodurch das Gesamtsystem kostengünstiger und auch platzoptimiert ausgebildet werden kann.

Vorzugsweise sind abhängig von den Stellungen der Schalter die Betriebszustände der einzelnen Lichtquellen vorgebbar.

Bevorzugt sind diese Schalter mit einem zweiten Schaltungsknoten verbunden. Das Beleuchtungssystem bzw. die Schaltungsanordnung umfassend die mehreren Lichtquellen, welche Lasten darstellen, sind somit alle mit einem ersten gemeinsamen Schaltungsknoten verbunden, über welchen eine Energieversorgung, insbesondere eine Stromversorgung, bereitstellbar ist, wobei wiederum in Reihe dazu geschaltete Schalter mit dem zweiten Schaltungsknoten verbunden sind, durch welchen die Rückleitung der Energie, insbesondere des elektrischen Stroms, zu der Energieversorgungseinheit, insbesondere der Stromquelle, bewerkstelligbar ist. Die einzelnen Schalter, welche insbesondere im Falle einer Energieversorgung über eine Stromquelle als Stromventile bezeichnet werden können, können über die Steuereinheit derart geöffnet und geschlossen werden, dass ein sicheres und fehlerfreies Schalten ermöglicht werden kann, obwohl jedes einzelne der Stromventile bzw. jeder einzelne Schalter über die ihm zugeordnete Last bzw. über die ihm zugeordnete Lichtquelle in Serie zu dieser Energieversorgungseinheit bzw. der Stromquelle liegt.

Vorzugsweise ist zwischen den beiden Schaltungsknoten zumindest ein Kondensator bzw. ein Entlastungskondensator für die steuerbaren Schalter geschaltet. Es kann auch vorgesehen sein, dass jedem Schalter ein derartiger Kondensator parallel geschaltet ist. Bevorzugt kann vorgesehen sein, dass alle Verbindungsknoten zwischen den Lichtquellen und den zugeordneten Schaltern durch ein symmetrisches oder asymmetrisches Netzwerk aus derartigen Kondensatoren verbunden sind.

Bevorzugt ist abgesehen von relativ kurzen Kommutierungsintervallen immer stets mindestens eines der besagten Stromventile bzw. einer der Schalter leitfähig geschaltet und somit geschlossen. '

Bevorzugt ist durch einen verringerten Ausgangsstrom der Energieversorgungseinheit, insbesondere der Stromquelle, während dieser Kommutierungszeit die Spannung über allen in einem Blockbetrieb geschalteten Schalter unter deren kritischer Schwelle. Bevorzugt ist der Ausgangsstrom durch die Reglereinheit einstellbar, wobei die Reglereinheit vorteilhafterweise über eine Störgrößenaufschaltung verfügt.

Der Leistungsbedarf an die gemeinsame Energieversorgungseinheit kann sich zwischen den einzelnen Betriebszuständen der Lichtquellen, welche sich abhängig von der zur erzeugenden Farbsequenz situationsabhängig ändern kann, ändern.

Bei gleichzeitigem Betrieb von mehreren der Lichtquellen kann vorgesehen sein, dass die Reglereinheit die Energieversorgungseinheit, insbesondere die Stromquelle, dahingehend ausregelt, exakt diejenige Leistung abzugeben, die die Summe der Lichtquellen benötigt. Es kann vorgesehen sein, dass sich die Reglereinheit während den kurzen Kommutierungsintervallen auf die im nachfolgenden Betriebszustand zu erwartende Leistungsanforderung präventiv einstellt, bevorzugt derart, dass sich dadurch die Einschwingzeit des gesamten Systems verkürzt. Ebenso kann vorgesehen sein, dass die Reglereinheit derart ausgebildet ist, dass sie unmittelbar nach den Kommutierungsintervallen durch eine dynamische Sollwerteinstellung die Einschwingamplitude des Systems verkleinert.

Vorzugsweise ist zumindest eine Lichtquelle als Leuchtdiode ausgebildet. Bevorzugt ist vorgesehen, dass alle Lichtquellen des Beleuchtungssystems als Leuchtdioden ausgebildet sind, wobei jede der Leuchtdioden zur Erzeugung von Lichtsignalen einer individuellen Farbe ausgebildet sind. Es kann auch vorgesehen sein, dass zumindest zwei derartige Leuchtdioden in einem Signalpfad in Reihe geschaltet sind, und beide zur Erzeugung von Lichtsignalen einer Lichtfarbe ausgebildet sind. Dadurch können Ketten von Leuchtdioden ausgebildet werden, wobei jede Kette in sich einfarbig ist. '

Es kann auch vorgesehen sein, dass die Strahlungsstärke der Leuchtdioden eine Eingangsgröße für die Reglereinheit ist.

Bevorzugt ist das Beleuchtungssystem als Bildprojektionssystem ausgebildet, wobei die Lichtquellen dann derart angeordnet sind, dass sie zur Beleuchtung einer Bildanzeigevorrichtung, insbesondere eines Displays, angeordnet sind.

Bei einem erfindungsgemäßen Verfahren zum Betreiben eines Beleuchtungssystems mit einer ersten Lichtquelle und zumindest einer zweiten Lichtquelle, welche zur Erzeugung von Lichtsignalen unterschiedlicher Farben ausgebildet sind, werden die Lichtquellen zum Erzeugen einer vorgebbaren Farbsequenz entsprechend angesteuert. Ein wesentlicher Gedanke besteht darin, dass die Lichtquellen durch eine gemeinsame Steuereinheit betrieben werden und durch diese Steuereinheit in der für die Erzeugung der vorgebbaren Farbsequenz erforderlichen Folge, insbesondere in der erforderlichen Reihenfolge, angesteuert werden. Das erfindungsgemäße Verfahren ermöglicht ein aufwandsarmes und dennoch präzises Erzeugen von auch sehr komplexen Farbsequenzen.

Vorteilhafte Ausgestaltungen des erfindungsgemäßen Beleuchtungssystems sind auch als vorteilhafte Ausgestaltungen des erfindungsgemäßen Verfahrens anzusehen.

### Kurze Beschreibung der Zeichnung

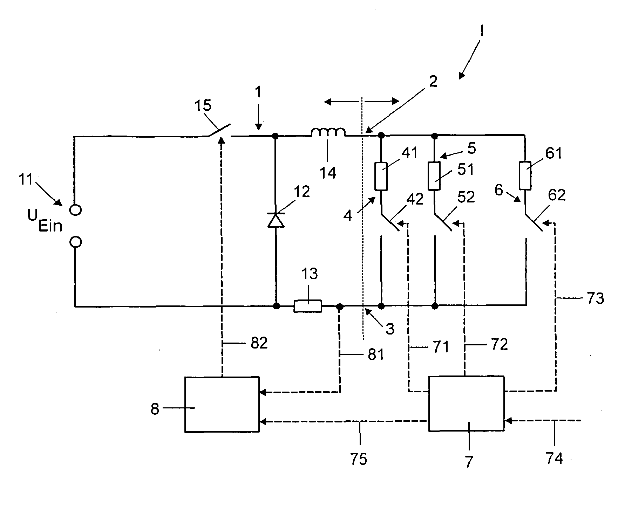

Im Nachfolgenden wird ein Ausführungsbeispiel der vorliegenden Erfindung anhand einer schematischen Zeichnung näher erläutert. Die einzige Figur 1 zeigt eine Schaltungsanordnung eines Bildprojektionssystems.

### Bevorzugte Ausführung der Erfindung

In der schematischen Darstellung gemäß Figur 1 ist eine Schaltungsanordnung eines Beleuchtungssystems gezeigt, welches als Bildprojektionssystems 1 ausgebildet ist. Das Bildprojektionssystem 1 umfasst als Energieversorgungseinheit eine Stromquelle 1, welche eine Spannungsquelle 11 sowie eine Diode 12, einen Shunt 13 und eine Induktivität 14 aufweist. Darüber hinaus umfasst die Stromquelle 1 einen Schalter 15. Die dargestellte Schaltungsanordnung des Bildprojektionssystems I umfasst einen ersten Schaltungsknoten 2 und einen zweiten Schaltungsknoten 3. Darüber hinaus umfasst das Bildprojektionssystem 1 eine Bildanzeigevorrichtung (nicht dargestellt), welche über eine Mehrzahl von Lichtquellen zur Darstellung einer Farbsequenz beleuchtbar ist.

Dazu weist das Beleuchtungssystem bzw. das Bildprojektionssystem 1 im Ausführungsbeispiel eine Mehrzahl an parallel geschalteten Lichtquellen 41, 51 und 61 auf. Die als Lasten ausgebildeten Lichtquellen 41, 51 und 61 sind im Ausführungsbeispiel als Leuchtdioden realisiert, wobei die Lichtquelle 41 zur Erzeugung von Lichtsignalen grüner Lichtfarbe, die zweite Lichtquelle 51 zur Erzeugung von Lichtsignalen roter Lichtfarbe und die dritte Lichtquelle 61 zur Erzeugung von Lichtsignalen blauer Lichtfarbe ausgebildet ist.

Wie aus der Darstellung in Figur 1 zu erkennen ist, ist die erste Lichtquelle 41 in einen Signalpfad 4 geschaltet, in welchem in Reihe zur Lichtquelle 41 ein Schalter 42 geschaltet ist. Entsprechend ist die zweite Lichtquelle 51 in einem parallelen Signalpfad 5 geschaltet, wobei die zweite Lichtquelle 51 in Reihe zu einem zweiten Schalter 52 geschaltet ist. Analog dazu ist in einem dritten Signalpfad 6 die dritte Lichtquelle 61 in Reihe zu einem Schalter 62 geschaltet. Die drei Signalpfade 4, 5 und 6 sind parallel zueinander geschaltet, wobei die Lichtquellen 41, 51 und 61 zur Energieversorgung durch die Stromquelle 1 mit dem ersten Schaltungsknoten 2 verbunden sind.

Die drei Schalter 42, 52 und 62 sind zur Rückführung des Stroms zur Stromquelle 1 mit dem zweiten Schaltungsknoten 3 verbunden.

Darüber hinaus umfasst die gezeigte Schaltungsanordnung bzw. das Bildprojektionssystem 1 eine Steuereinheit 7, welche zur Steuerung aller drei Schalter 42, 52 und 62 und somit auch zur Steuerung des Betriebszustands der Lichtquellen 41, 51 und 61 ausgebildet ist. Die Schalter 42, 52 und 62 werden dabei durch die Steuereinheit 7 derart geöffnet und geschlossen, dass situationsabhängig die zur Erzeugung der vorgebbaren Farbsequenz erforderlichen Lichtquellen 41, 51 und 61 betrieben werden. Dazu ist die eine gemeinsame Steuereinheit 7 über separate Signalverbindungen 71, 72 und 73 mit den jeweiligen Schaltern 42, 52 und 62 kontaktiert.

Wie Figur 1 des Weiteren zeigt, ist eine weitere Signalverbindung 74 ausgebildet, welche eine Schnittstelle zur Synchronisation des Mikroprozessors bzw. der Steuereinheit 7 mit weiteren Komponenten des Bildprojektionssystems 1 darstellt.

Im Hinblick auf die situationsabhängige erforderliche Energiebereitstellung durch die Stromquelle 1 umfasst das Bildprojektionssystem I in der gezeigten Schaltungsanordnung auch eine Reglereinheit 8, welche mit der Steuereinheit 7 elektrisch verbunden ist, wobei dazu über eine Signalverbindung 75 eine Sollwertvorgabe sowie die Vorgabe einer Schaltfrequenz von der Steuereinheit 7 an die Reglereinheit 8 übertragen werden kann. Abhängig von diesen vorgebbaren Parametern kann die Reglereinheit 8 über eine Signalverbindung 82 den Schalter 15 der Stromquelle 1 entsprechend regeln. Darüber hinaus kann über eine Signalverbindung 81 eine Strommessung erfolgen, welche als Information der Reglereinheit 8 bereitgestellt werden kann. Abhängig von diesen Vorgaben und Informationen kann dann situationsabhängig die Energiebereitstellung durch die Stromquelle 1 mittels der Reglereinheit 8 geregelt werden und eine individuell erforderliche Energieabgabe, insbesondere eine individuelle und situationsabhängige Stromversorgung der Lichtquellen 41, 51 und 61, gewährleistet werden.

Abhängig von der momentan erforderlichen Lichtintensität und Lichtzusammensetzung kann dann zumindest eine der Lichtquellen 41, 51 und 61 betrieben werden, indem die entsprechenden Schalter 42, 52 und 62 über die gemeinsame Steuereinheit 7 geöffnet oder geschlossen werden. In aufwandsarmer und bauteilreduzierter Weise kann dadurch mittels dem Bildprojektionssystem I die Darstellung von verschiedensten Farbsequenzen ermöglicht werden. Die dazu erforderliche Reihenfolge der zu betreibenden Lichtquellen 41, 51 und 61 kann durch ein einziges Betriebsgerät bzw. durch eine einzige Steuereinheit 7 durchgeführt werden.

## Patentansprüche

1. Beleuchtungssystem mit einer ersten Lichtquelle (41, 51, 61), welche zur Erzeugung von Lichtsignalen einer ersten Farbe ausgebildet ist, und zumindest einer zweiten Lichtquelle (41, 51, 61), welche zur Erzeugung von Lichtsignalen einer zweiten Farbe ausgebildet ist, wobei die Lichtquellen (41, 51, 61) zur Erzeugung einer vorgebbaren Farbsequenz ansteuerbar sind,
**dadurch gekennzeichnet, dass**
die Lichtquellen (41, 51, 61) durch eine gemeinsame Steuereinheit (7) betreibbar und durch diese in der für die Erzeugung vorgebbaren Farbsequenz erforderlichen Folge ansteuerbar sind.

2. Beleuchtungssystem nach Anspruch 1,
**dadurch gekennzeichnet, dass**
die Lichtquellen (41, 51, 61) parallel geschaltet sind und über einen ersten Schaltungsknoten (2) zur Energieversorgung mit einer Energieversorgungseinheit, insbesondere einer Stromquelle (1), elektrisch verbunden sind.

3. Beleuchtungssystem nach Anspruch 2,
**dadurch gekennzeichnet, dass**
die Stromquelle (1) zur Bereitstellung zumindest eines elektrischen Stroms mit dominantem Gleichanteil oder eines Gleichstroms ausgebildet ist.

4. Beleuchtungssystem nach Anspruch 2 oder 3,
**dadurch gekennzeichnet, dass**
eine Reglereinheit (8) zur Regelung der Energieversorgungseinheit (1) ausgebildet ist, welche mit der Steuereinheit (7) verbunden ist.

5. Beleuchtungssystem nach Anspruch 4,
**dadurch gekennzeichnet, dass**
die Steuereinheit (7) zur Vorgabe einer Soll-Energieabgabe der Energieversorgungseinheit (1) und einer Schaltfrequenz der Energieversorgungseinheit (1) an die Reglereinheit (8) ausgebildet ist.

6. Beleuchtungssystem nach einem der Ansprüche 2 bis 5,
**dadurch gekennzeichnet, dass**
die Stromquelle (1) ein Tiefsetzsteller oder ein Buck-Converter ohne Ausgangs-Filterkondensator ist.

7. Beleuchtungssystem nach einem der vorhergehenden Ansprüche, welches eine Anzahl N von Lichtquellen (41, 51, 61) umfasst, wobei zumindest eine Anzahl N-1 von Lichtquellen (41, 51, 61) jeweils in einem Signalpfad (4, 5, 6) in Reihe zu einem Schalter (42, 52, 62) geschaltet ist, wobei die Schalter (42, 52, 62) mittels der Steuereinheit (7) ansteuerbar sind.

8. Beleuchtungssystem nach Anspruch 7,
**dadurch gekennzeichnet, dass**
abhängig von den Stellungen der Schalter (42, 52, 62) die Betriebszustände der Lichtquellen (41, 51, 61) vorgegeben sind.

9. Beleuchtungssystem nach Anspruch 7 oder 8,
**dadurch gekennzeichnet, dass**
die Schalter (42, 52, 62) mit einem zweiten Schaltungsknoten (3) verbunden sind.

10. Beleuchtungssystem nach Anspruch 2 und 9,
**dadurch gekennzeichnet, dass**
zwischen den beiden Schaltungsknoten (2, 3) ein Kondensator geschaltet ist.

11. Beleuchtungssystem nach einem der Ansprüche 7 bis 10,
**dadurch gekennzeichnet, dass**
zu jedem Schalter (42, 52, 62) ein Kondensator parallel geschaltet ist.

12. Beleuchtungssystem nach einem der Ansprüche 7 bis 11,
**dadurch gekennzeichnet, dass**
alle Verbindungsknoten zwischen den Lichtquellen (41, 51, 61) und den zugeordneten Schaltern (42, 52, 62) durch ein symmetrisches oder asymmetrisches Netzwerk aus Kondensatoren verbunden sind.

13. Beleuchtungssystem nach einem der vorhergehenden Ansprüche,
**dadurch gekennzeichnet, dass**
zumindest eine Lichtquelle als Leuchtdiode (41, 51, 61) ausgebildet ist.

14. Beleuchtungssystem nach einem der vorhergehenden Ansprüche, welches als Bildprojektionssystem (I) ausgebildet ist.

15. Verfahren zum Betreiben eines Beleuchtungssystems (I) mit einer ersten Lichtquelle (41, 51, 61) und zumindest einer zweiten Lichtquelle (41, 51, 61), wobei jede Lichtquelle (41, 51, 61) zur Erzeugung von Lichtsignalen einer individuellen Farbe ausgebildet ist,
**dadurch gekennzeichnet, dass**
die Lichtquellen (41, 51, 61) durch eine gemeinsame Steuereinheit (7) betrieben werden und durch diese Steuereinheit (7) in der für die Erzeugung einer vorgebbaren Farbsequenz erforderlichen Folge angesteuert werden.
